# EUROPÄISCHE PATENTSCHRIFT

(11) **EP 2 025 135 B1**
(45) Veröffentlichungstag und Bekanntmachung des Hinweises auf die Patenterteilung: **12.05.2010**
(21) Anmeldenummer: 07722287.5
(22) Anmeldetag: 24.04.2007
(51) Int. Cl.: H04M 1/02

(54) **GLEITMECHANISMUS FÜR TRAGBARE GERÄTE**
SLIDING MECHANISM FOR PORTABLE APPLIANCES
MÉCANISME COULISSANT POUR APPAREILS PORTATIFS

(30) Priorität: 26.05.2006 DE 102006025018
(43) Veröffentlichungstag der Anmeldung: 18.02.2009
(73) Patentinhaber: Lumberg Connect GmbH, 58579 Schalksmühle (DE)
(72) Erfinder: TASCHKE, Henning, 44869 Bochum (DE)
(74) Vertreter: Ostriga, Sonnet, Wirths & Roche
(86) Internationale Anmeldenummer: PCT/DE2007/000729
(87) Internationale Veröffentlichungsnummer: WO 2007/137546

(56) Entgegenhaltungen:
- EP-A- 1 524 822
- WO-A-2005/091515
- WO-A-2006/031078
- WO-A-2007/035008

## Beschreibung

Die Erfindung betrifft einen Gleitmechanismus für tragbare Geräte, wie Mobilfunktelefon, tragbarer Computer oder persönliche digitale Assistenten (PDA), welche ein erstes Geräteteil, beispielsweise eine Unterschale und ein zweites Geräteteil, beispielsweise eine Oberschale umfasst, wobei Unterschale und Oberschale relativ zueinander beweglich angeordnet sind, so dass sie unter Vermittlung eines die Bewegungsrichtung definierenden Steuermechanismus eine erste und zweite Endlage zueinander einnehmen können, und mit wenigstens einem Federelement, dessen erster Anlenkpunkt der Unterschale und dessen zweiter Anlenkpunkt der Oberschale, gegebenenfalls unter Vermittlung von Zwischenbauteilen, zugeordnet ist, wobei mittels der Relativbewegung eines Geräteteils von einer Endlage bis zu einem Kraftumkehrpunkt eine Federspannung des Federelementes aufgebaut wird, welche das Geräteteil in seine andere Endlage drängt.

Ein derartiger Gleitmechanismus ist beispielsweise aus EP 1 422 911 A2 bekannt. Dort wird insbesondere ein Mobilfunktelefon mit Unter- und Oberschale offenbart, welche gegeneinander verschieblich angeordnet sind. Die dort eingesetzten Schenkelfedern mit mehrfach gewundenem Auge zwingen, nach Überwindung eines Kraftumkehrpunktes, die Oberschale von ihrer ersten in ihre zweite Endlage.

Aus einem ersten druckschriftlich nicht belegbaren Stand der Technik ist ein Gleitmechanismus bekannt, welcher Schenkelfedern mit spiralartiger Windung verwendet.

Aus EP 1 422 911 A2 ist zu ersehenden, dass der dortige Gleitmechanismus mehrere Führungsglieder erfordert, was zu einer vergleichsweise großen Bauhöhe führt. Die Bauhöhe wird zudem von der Anzahl übereinander liegender Windungen der Schenkelfeder - also der Federhöhe - beeinflusst. Nachteilig am druckschriftlichen Stand der Technik ist zusammenfassend die vergleichsweise große Bauhöhe, welche den Anforderungen an die Miniaturisierung tragbarer Geräte bei gleichzeitig zunehmender Funktionalität entgegensteht.

Auch bei der Verwendung von Schenkelfedern mit spiralartigen Windungen ist eine Bauhöhe von wenigstens zwei Federwindungen erforderlich, da das innen liegende Ende der Spiralwindung über die übrigen Windungen hinweg zu einem Haltepunkt an Unter- bzw. Oberschale geführt werden muss, um eine günstige Kraftübertragung der Federenergie auf das entsprechende Geräteteil zu gewährleisten.

Solche nachteiligen Schenkelfedern sind auch in WO 2005/091515 A1 offenbart.

WO 2006/031078 A1 offenbart einen Gleitmechanismus, der ein Federsystem zum halbautomatischen Öffnen oder Schließen eines Gerätes beinhaltet. Dieses Federsystem umfasst vier auf Führungsstäben gelagerte Federelemente in Form von Schraubenfedern, die sich an Widerlagern abstützen. Beim Bewegen der Gehäuseteile verkürzt sich der Abstand zwischen den Widerlagern bis zu einem Umkehrpunkt. Hierdurch werden die Federelemente gestaucht. Nach Überschreiten des Umkehrpunktes sind die Federelemente unter Abbau der Federspannung in der Lage, die Widerlager auseinander zu drängen, in Folge dessen die Gehäuseteile in eine Endlage bewegt werden.

Aufgabe der Erfindung ist daher, einen neuartigen Gleitmechanismus für tragbare Geräte mit geringerer Bauhöhe zu schaffen.

Gelöst wird die Aufgabe von einem Gleitmechanismus gemäß Anspruch 1, insbesondere mit den kennzeichnenden Merkmalen, wonach das Federelement zwei Federschenkel mit je einem Anlenkpunkt aufweist, die mittels eines auch unter Federspannung im Wesentlichen spannungsfreien Kraftumlenkschenkels miteinander gekoppelt sind.

Bei dem erfindungsgemäßen Gleitmechanismus sind keine übereinander liegenden Federwindungen erforderlich, was seine Bauhöhe entsprechend reduziert. Zudem kann das erfindungsgemäße Federelement direkt an Ober- bzw. Unterschale angreifen, ohne das vermittelnde Zwischenbauteile notwendig sind, die jedoch gleichwohl Einsatz finden können, sofern dies vorteilhaft ist. Da anders als bei Schenkelfedern mit schrauben- oder spiralartigen Windungen beim erfindungsgemäßen Federelement keine sich überlappende Federwindungen bzw. Federschenkel notwendig sind, lässt sich dieses Federelement besonders einfach, beispielsweise durch Stanzen, herstellen und im automatischen Fertigungsprozess in den Gleitmechanismus einsetzen.

Das Federelement des Gleitmechanismus ist bevorzugt zu seinem Mittelpunkt punktsymmetrisch aufgebaut, wobei der Mittelpunkt des Federelementes etwa mittig des Kraftumlenkschenkels liegt.

Der Kraftumlenkschenkel bewirkt, dass das Federelement unter Aufbau und Abbau der Federspannung eine rotative Bewegung um seinen Mittelpunkt vollzieht.

Bei einer besonders bevorzugten Ausführungsform des erfindungsgemäßen Gleitmechanismus sind die Federschenkel im Wesentlichen um den Kraftumlenkschenkel und/oder den Mittelpunkt des Federelementes gekrümmt ausgebildet, was den Bewegungsraum des Federelementes unter Vollziehung der rotativen Bewegung minimiert.

Bevorzug ist weiterhin ein Gleitmechanismus, dessen Federschenkel mäanderartig ausgebildet sind, wobei einzelne Federschenkelabschnitte mittels Mäanderschlingen einander zugeordnet sind. Dabei ist es von Vorteil, wenn die Federschenkelabschnitte im Wesentlichen um den Kraftumlenkschenkel und/oder den Mittelpunkt des Federelementes gekrümmt ausgebildet sind.

Die mäanderartige Aneinanderreihung mehrerer Federschenkelabschnitte erlaubt es, die Federeigenschaften durch Anzahl, Geometrie und Länge der einzelnen Federschenkelabschnitte an den zur Verfügung stehenden Raum, an die Kraftanforderungen zum Verschieben von Unter- und Oberschale zueinander, an den benötigten Federweg sowie die physikalischen Grenzen des verwendeten Materials anzupassen.

Gekrümmte Federschenkelabschnitte führen, wie schon vorher erwähnt, bei rotativer Bewegung zu einem geringeren Raumbedarf des Federelementes und erlauben aufgrund des Zusammenziehens des Federelementes unter Aufbau einer Federspannung einen großen Federweg.

Je nach Anforderung an den Gleitmechanismus kann es vorteilhaft sein, wenn der Kraftumlenkschenkel im Symmetriepunkt ein Lager aufweist, mittels dessen das Federelement an wenigstens einem der Geräteteile drehbar gelagert ist. So wird vermieden, dass das Federelement neben seiner rotativen Bewegung durch die Bewegung der Geräteteile zueinander relativ zu seiner Ruhelage verschoben wird.

Weitere Vorteile der Erfindung ergeben sich aus der folgenden Zeichnungsbeschreibung. Es zeigen:

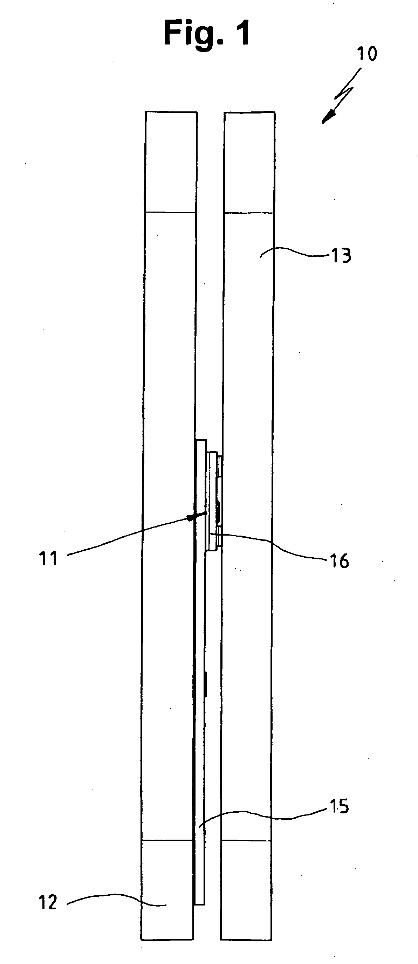

Fig. 1 eine schematische Darstellung eines Gerätes mit erfindungsgemäßem Gleitmechanismus,
Fig. 2 das Gerät gemäß Fig. 1 in Ansicht auf den Gleitmechanismus in einer ersten Endlage,
Fig. 3 eine Ansicht gemäß Fig. 2 mit bis zum Kraftumkehrpunkt verschobenem Geräteteil,
Fig. 4 eine Ansicht gemäß Fig. 2 des in seine zweiten Endlage verschobenen Geräteteils,
Fig. 5 eine schematische Darstellung eines im Gleitmechanismus verwendbaren Federelementes in seiner Grundform,
Fig. 6 ein in den Fig. 2 bis 4 dargestelltes Federelement in Ansicht von oben,
Fig. 7 das Federelement gemäß Fig. 6 in perspektivischer Ansicht,
Fig. 8 ein Federelement zur Verwendung im Gleitmechanismus in einer alternativen Ausführungsform,
Fig. 9 eine Darstellung des Federelementes gemäß Fig. 8, aus welcher die innerhalb des Federelementes auftretenden Spannungen ersichtlich sind.

In den Figuren ist ein tragbares Gerät, wie beispielsweise ein Mobilfunktelefon, ein tragbarer Computer (Notebook, Laptop oder Tablet-PC) oder ein persönlicher digitaler Assistent (PDA), insgesamt mit der Bezugsziffer 10 gekennzeichnet.

Das Gerät 10 weist einen insgesamt mit 11 bezeichneten Gleitmechanismus auf, mittels dessen ein erstes Geräteteil 12 - im Folgenden auch als Unterschale 12 bezeichnet - relativ zu einem zweiten Geräteteil 13 - im Folgenden auch als Oberschale 13 bezeichnet - relativ zueinander bewegbar sind.

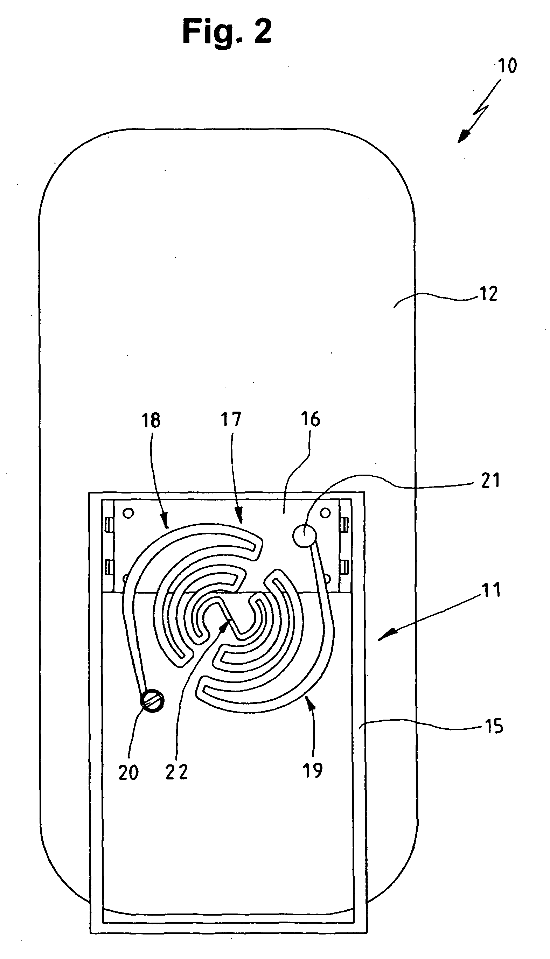

In den Figuren 2 bis 4 ist das Gerät 10 ohne 13 dargestellt, um einen Blick auf den Gleitmechanismus 11 zu ermöglichen. Der Gleitmechanismus 11 umfasst zunächst einen Rahmen 15 und einen am Rahmen 15 verschieblich angeordneten Schlitten 16. Rahmen 15 und Schlitten 16 definieren die Bewegungsbahn von Unter- und Oberschale 12, 13.

Im Ausführungsbeispiel ist der Rahmen 15 der Oberschale 13 bzw. dem zweiten Geräteteil 13 und der Schlitten 16 der Unterschale 12 bzw. dem ersten Geräteteil 12 zugeordnet und als Zwischenbauteil ausgeführt. Der Rahmen 15 und der Schlitten 16 können jedoch genauso integraler Bestandteil bzw. werkstoffeinheitlich-stoffschlüssige Bestandteile von Oberschale 13 und Unterschale 12 sein.

Der erfindungsgemäße Gleitmechanismus 11 benötigt als einziges weiteres Element ein Federelement 17, welches der halbautomatischen Öffnung des Gerätes 10, also einer halbautomatischen Relativbewegung von Unterschale 12 und Oberschale 13 zueinander dient.

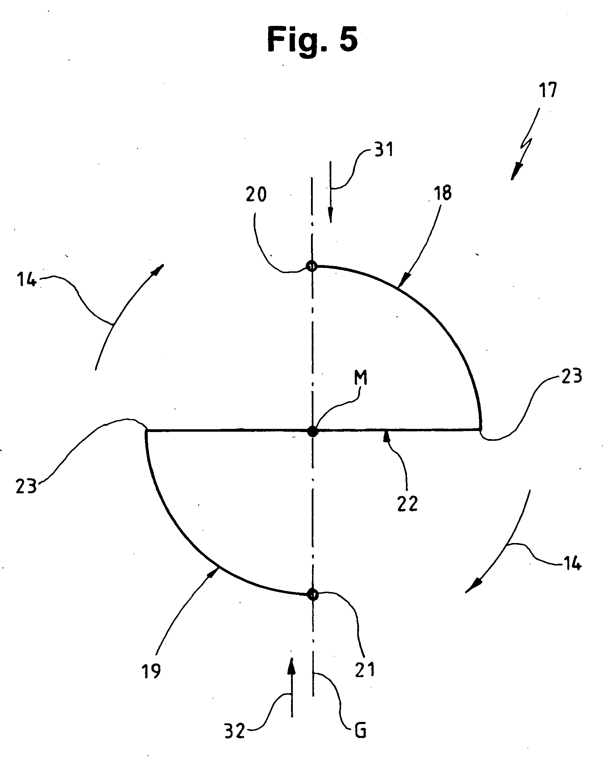

Das Federelement 17 weist einen ersten Federschenkel 18 und einen zweiten Federschenkel 19 mit jeweils einem Anlenkpunkt 20 und 21 auf, welche unter Vermittlung eines Kraftumlenkschenkels 22 miteinander gekoppelt sind. Der grundsätzliche Aufbau lässt sich am besten aus der Grundform des Federelementes 17 in Fig. 5 ersehen.

Das Federelement 17 ist zu seinem Mittelpunkt M punktsymmetrisch aufgebaut, weshalb der Mittelpunkt M auch als Symmetriepunkt M bezeichnet wird. Der Mittel- / Symmetriepunkt M liegt bezüglich der Endpunkte 23 des Kraftumlenkschenkels 22, an welchen sich die Federschenkel 18 und 19 anschließen, etwa mittig des Kraftumlenkschenkels 22. Zugleich entspricht der Mittelpunkt M dem Schnittpunkt einer Geraden G mit dem Kraftumlenkschenkel 22, welche durch die Anlenkpunkte 20 und 21 verläuft.

Aus der Fig. 5 läßt sich zudem die Bedeutung des Kraftumlenkschenkels 22 am einfachsten erläutern. Wird auf den Anlenkpunkt 20 Druck ausgeübt (Pfeilrichtung 31), führt die so auf den Federschenkel eingeleitete Kraft nicht nur zu einer Stauchung des Federschenkels 18, sondern wird auf den Kraftumlenkschenkel 22 weitergegeben. Der Kraftumlenkschenkel weicht mit seinem bezüglich Fig. 5 rechten Ende 23 in Pfeilrichtung 14 aus. Gleichzeitig schwenkt das bezüglich Fig. 5 linke Ende 23 des Kraftumlenkschenkels 22 in dieselbe Richtung (Pfeilrichtung 14). Dabei wandert der Symmetriepunkt bzw. der Kraftumlenkschenkel in Richtung des Anlenkpunktes 21 auf der Geraden G. Das Federelement 17 zieht sich folglich unter Ausführung einer linearen Bewegung und Drehung um seinen Mittelpunkt M zusammen. Analog wirkt eine Kraft in Pfeilrichtung 32.

Der zum Mittelpunkt M des Kraftumlenkschenkels 22 punksymmetrische Aufbau des Federelementes 17 in Verbindung mit den um diesen Symmetriepunkt M gekrümmten Federschenkeln bewirkt somit eine rotative Bewegung des Federelementes 17 unter Aufbau einer Federspannung um den Mittelpunkt M und somit zu einer Selbststabilisierung, wobei sich die Anlenkpunkte 20 und 21 auf der Geraden G im Wesentlichen linear aufeinander zu bewegen.

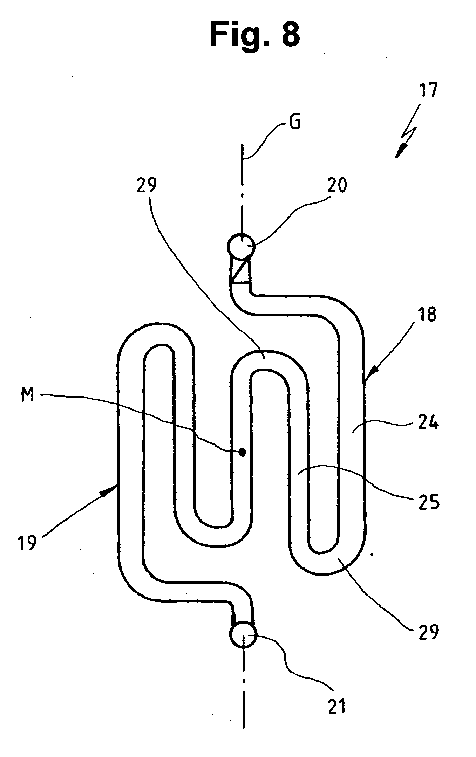

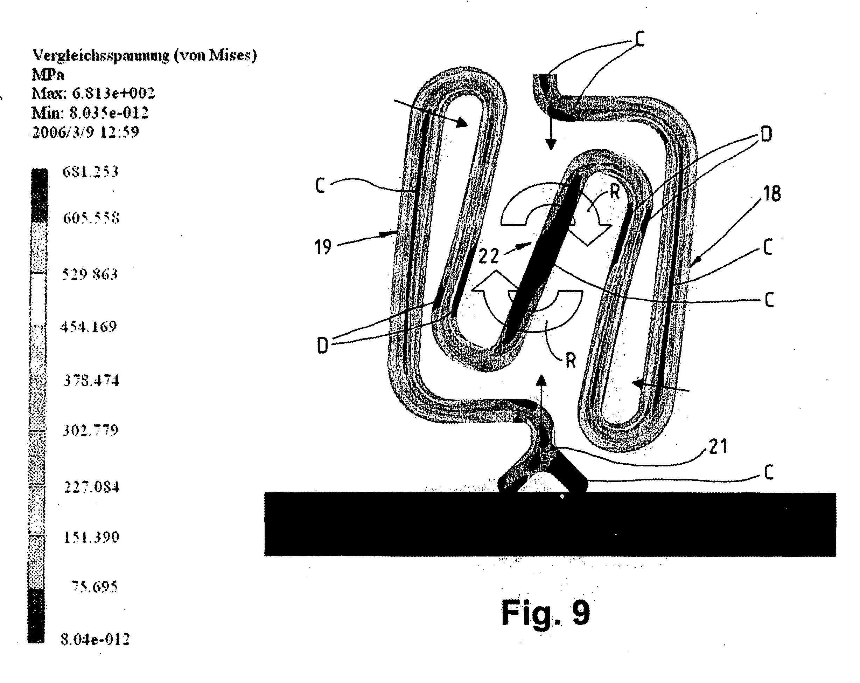

Mit Blick auf den in Fig. 8 und 9 alternativ dargestellten Aufbau des Federelementes 17 sei klargestellt, dass die vorbeschriebenen Wirkprinzipien auch hier gelten. Die zur Geraden G parallele Ausrichtung der Federschenkelabschnitte 24 und 25 sowie des Kraftumlenkschenkels 22 verändern lediglich die Federcharakteristik.

Aufgrund der linearen Bewegung der Anlenkpunkte 20 und 21 wird beim erfindungsgemäßen Gleitmechanismus 11 lediglich ein Federelement 17 benötigt.

Wie insbesondere aus den Figuren 2 bis 5 ersichtlich ist, dienen die Anlenkpunkte 20 und 21 der Anbindung des Federelementes 17 einerseits an die Unterschale 12 (Anlenkpunkt 21) und andererseits an die Oberschale 13 (Anlenkpunkt 20), wobei die Anlenkpunkte vorzugsweise als Befestigungsaugen ausgebildet sind, in welche unter- bzw. oberschalenseitige Rastmittel in Form quergeschlitzter Zapfen zur Befestigung des Federelementes 17 eingreifen.

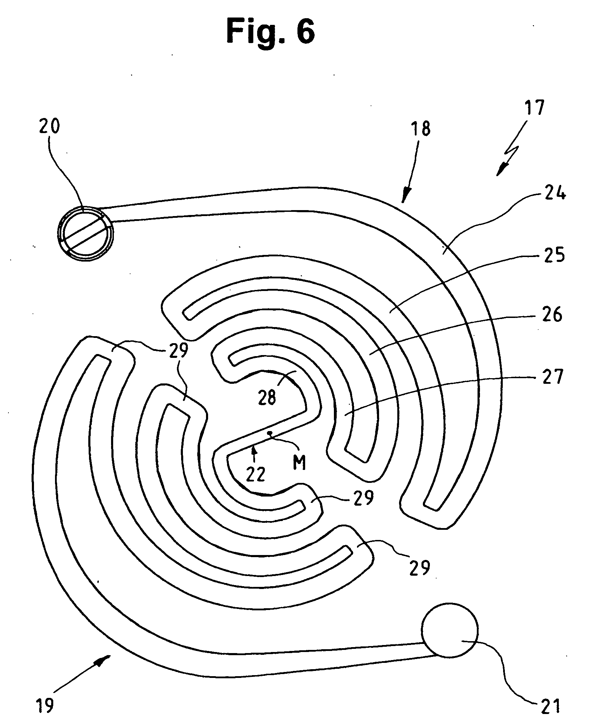

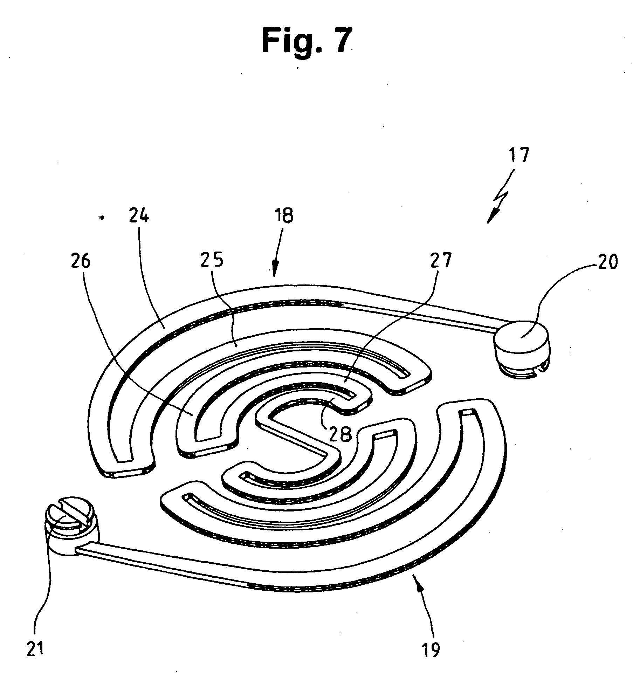

In den Figuren 6 und 7 ist ein gegenüber Fig. 5 komplexer aufgebautes Federelement 17 dargestellt, welches im erfindungsgemäßen Gleitmechanismus 11 (siehe auch Figuren 2 bis 4) bevorzugt Verwendung findet. Das Federelement 17 in Fig. 6 weist Federschenkel 18 und 19 auf, welche mehrfach mäanderartig bzw. labyrinthartig geschlungen sind. Die Federschenkel 18 und 19 weisen vorliegend insgesamt fünf Federschenkelabschnitte auf, welche beginnend mit dem ersten Federschenkelabschnitt 24 bis zum fünften Federschenkel 28 mit den Bezugsziffern 24 bis 28 versehen sind. Die Federschenkelabschnitte 24 bis 28 sind jeweils einer mit dem nächsten über je eine Mäanderschlinge 29 miteinander gekoppelt.

Abgesehen von der Materialwahl des Federelementes - es kann nicht nur aus geeigneten Metallen, sondern auch aus Kunststoff gefertigt sein - bestimmen insbesondere die Anzahl der Federwindungen, welche durch jeweilige Federschenkelabschnitte 24 bis 28 und Mäanderschlingen 29 gebildet werden, die Federkraft und den Federweg. Je nach Anforderungen an den Gleitmechanismus 11 kann mittels zusätzlicher Federwindungen das Federelement 17 an die jeweiligen Vorgaben angepasst werden, z.B. an den für das Federelement 17 zur Verfügung stehenden Raum, an die Kraftanforderungen zum Verschieben der Geräteteile, den benötigten Federweg oder die physikalischen Grenzen des Materiales.

Das in Fig. 7 nochmals in perspektivischer Ansicht dargestellte Federelement 17 zeigt in Ergänzung zu bereits weiter oben Erwähntem, eine weitere Möglichkeit der Befestigung der Anlenkpunkte 20 und 21 an Ober- bzw. Unterschale 13, 12 bzw. an Zwischenbauteilen.

Anstelle der vorerwähnt als Befestigungsaugen ausgebildeten Anlenkpunkte 20 und 21 sind nunmehr diese in Fig. 7 mit den schon vorerwähnten Rastmitteln in Form quergeschlitzter Zapfen versehen, welche in korrespondierende, nicht dargestellte Rastöffnungen von Ober- und Unterschale 13, 12 zur Befestigung des Federelementes 17 eingreifen.

Die perspektivische Darstellung offenbart auch den wesentlichen Vorteil des Federelementes 17 gegenüber den Federelementen aus dem Stand der Technik. Die bislang verwendeten Federn benötigen eine gewisse Mindestbauhöhe des Gleitmechanismus in Abhängigkeit von der Anzahl übereinander liegender Federwindungen. Bei dem hier vorgestellten Federelement liegen die Federwindungen in einer einzigen gemeinsamen Ebene nebeneinander, so dass allein die Stärke bzw. Höhe des verwendeten Materiales die Höhe des Federelementes 17 definiert.

Darüber hinaus hier nicht dargestellt, aber mit Prioritätsdokument eingehend erläutert, kann das Federelement 17 insbesondere im Bereich seines Mittelpunktes M ein Lager aufweisen, mittels dessen es dreh- bzw. schwenkbar an einem Geräteteil wie Ober- oder Unterschale 13, 12 lagerbar ist. Eine solche Lagerung verhindert eine Relativbewegung des Federelementes bezüglich des jeweiligen Geräteteiles.

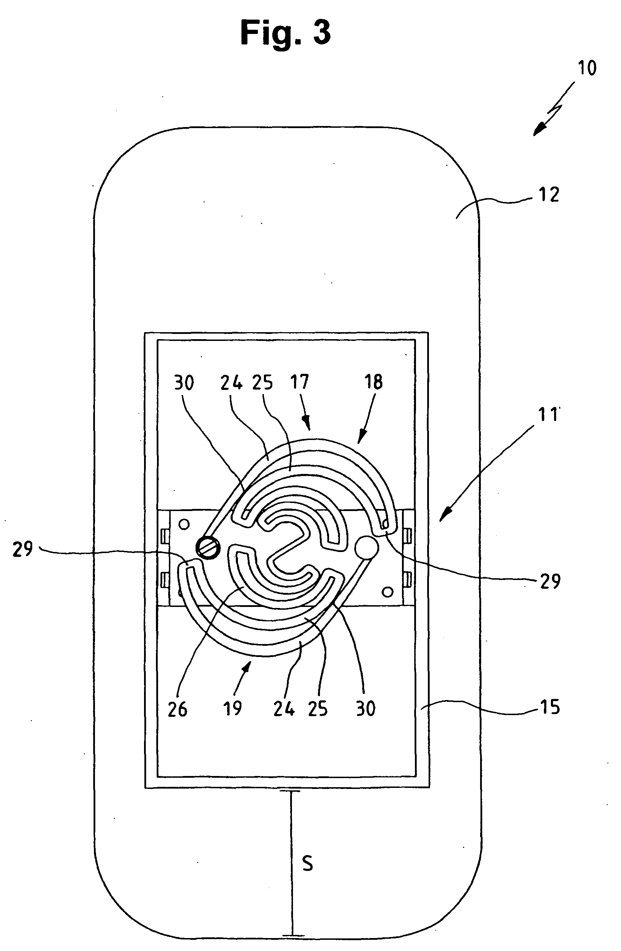

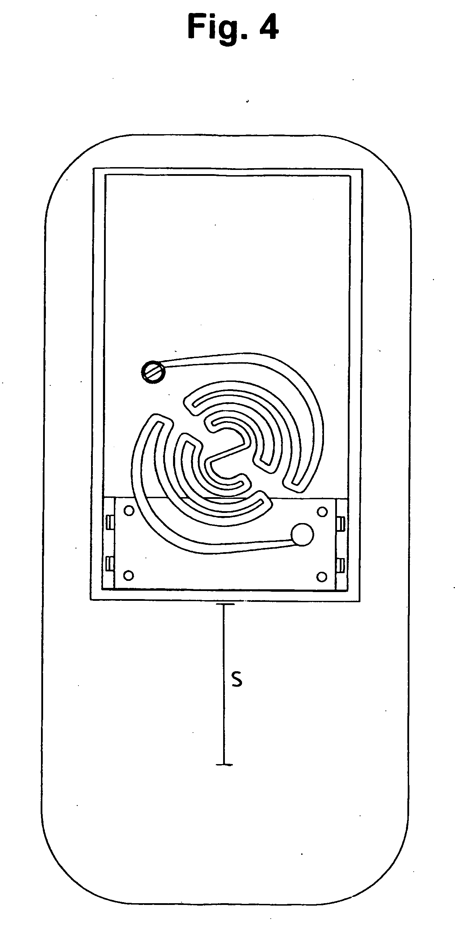

In den Figuren 2 bis 4 ist die Gleitbewegung der Geräteteile 12, 13 zueinander, ausgehend von einer ersten Endlage (Fig. 2) über das Erreichen des Kraftumlenkpunktes (Fig. 3) bis hin zur zweiten Endlage (Fig. 4) dargestellt, wobei die Unterschale 12 als ortsfest und der Rahmen 15 - stellvertretend für die Oberschale 13 - als jeweils um eine Strecke S verschoben anzusehen ist.

Das Federelement 17 weist in der ersten Endlage des Gleitmechanismusses 11 bzw. der Oberschale 13 eine erste Ruhelage auf, es befindet sich im Zustand maximaler Entspannung, ist also entweder im Wesentlichen ungespannt oder weist eine unter Berücksichtigung vordefinierter Faktoren konstante Vorspannung auf.

Bezüglich Fig. 3 ist die Oberschale 13 und somit der ihr zugeordnete Rahmen 15 bis zum Kraftumlenkpunkt des Federelementes 17 verschoben worden, wobei das Federelement 17 durch Verkürzen des Abstandes der Anlenkpunkte 21 und 20 zueinander gestaucht und somit mit einer Federspannung beaufschlagt worden ist.

Das Federelement 17 baut seine Federspannung auf, indem die einzelnen Windungen bzw. Federschenkelabschnitte 24 wechselweise zum Symmetriepunkt M hin gestaucht bzw. in die Gegenrichtung - vom Symmetriepunkt M weg - gestreckt werden.

Dies ist insbesondere bei Erreichen des Kraftumlenkpunktes, dargestellt in Fig. 3, gut ersichtlich, bei dessen Erreichen das Federelement 17 mit einer maximalen Federspannung beaufschlagt ist. Die beiden äußeren oder ersten Federschenkelabschnitte 24 des ersten Federschenkels 18 wie des zweiten Federschenkels 19 sind derart stark in Richtung des Mittelpunktes M gestaucht, dass sie nahe der Anlenkpunkte 20 und 21 den jeweils zweiten Federschenkelabschnitt 25 in einem Bereich 30 tangieren.

Gleichzeitig wird der jeweils zweite Federschenkel 25 in die Gegenrichtung vom Symmetriepunkt M weg gestreckt bzw ausgelenkt. Dies ist insbesondere bei einer vergleichenden Betrachtung der Fig. 3 mit Fig. 2 bzw. 4 ersichtlich. Im Bereich der den ersten und zweiten Federschenkelabschnitt 24/25 verbindenden Mäanderschlinge 29 ist der Abstand zwischen dem zweiten Federschenkelabschnitt 25 und dem darauf folgenden dritten Federschenkelabschnitt 26 größer als in der Ausgangs- oder Ruhelage des Federelementes 17 (siehe Fig. 2). Einzig der Kraftumlenkschenkel 22 ist trotz Aufbau der Federspannung spannungsfrei.

Am Kraftumlenkpunkt des Federelementes 17 (Fig. 3), an welchem das Federelement 17 seine maximale Federspannung aufbaut, endet die aktiv auf die Oberschale 13 bzw. den Rahmen 15 ausgeübte Bewegung. Bei Überschreiten des Kraftumlenkpunktes gibt das Federelement 17 die unter Aufbau der Federspannung gespeicherte Federenergie wieder ab und bewegt die Oberschale 13 nunmehr selbsttätig in ihre in Fig. 4 dargestellte zweite Endlage. Anhand der vergleichenden Betrachtung der Fig. 2 bis 4 ist zudem ersichtlich, dass sich das Federelement 17 unter Aufbau der Federspannung rotativ um seinen Mittelpunkt M bewegt. Diese Bewegung des Federelementes allein aufgrund der Federspannung ist zusätzlich in Fig. 9 dargestellt.

Der erfindungsgemäße Gleitmechanismus 11 ist nicht auf ein reines Verschieben zweier Geräteteile unter Verwendung des hier ausführlich dargestellten Federelementes 17 beschränkt, er lässt sich in gleicher Weise auch zum Verschwenken zweier Geräteteile in bogenförmiger Richtung verwenden, wobei die Steuerkulisse 11 entsprechend zu gestalten ist.

Fig. 8 zeigt eine weitere, alternative Ausgestaltung des Federelementes 17, wie sie ebenfalls schon im Prioritätsdokument offenbart ist. Dieses Federelement 17 weist mehrere Federwindungen, bestehend aus Federschenkelabschnitten 24 und 25 auf (im Prioritätsdokument mit Federabschnitt bezeichnet), welche über Mäanderschlingen 29 miteinander verbunden sind und zeichnet sich insbesondere dadurch aus, dass die einzelnen Federschenkelabschnitte nicht gekrümmt, sondern gerade ausgebildet sind. Auch ein solches Federelement ist selbstverständlich im Gleitmechanismus 11 verwendbar. Gekrümmte bzw. C-förmige Federschenkelabschnitte haben jedoch den Vorteil, dass sie bei gleicher Länge einen wesentlich geringeren Raum einnehmen. Bei der um den Symmetriepunkt stattfindenden rotativen Bewegung des Federelementes 17 (siehe Figuren 2 bis 4 und 9), ist der Rotationsraum bei gekrümmten Federelementen darüber hinaus deutlich geringer.

Fig. 9 zeigt die in dem hier in verschiedenen Alternativen vorgestellten Federelement 17 vorherrschenden Spannungsverhältnisse, bei Aufbau einer Federspannung. Auch die Fig. 9 findet sich im Prioritätsdokument als Fig. 13 wieder, weshalb auf den diesbezüglichen Offenbarungsgehalt der Prioritätsschrift ausdrücklich verwiesen wird.

Die mit C markierten dunklen Bereiche des Federelementes 17 stellen fast spannungsfreie Bereiche dar, wobei die Spannung in zunehmend helleren Bereichen höher wird. Die mit D gekennzeichneten dunklen Bereiche wiederum sind Orte höchster Federspannung. Aus dieser Darstellung wird deutlich, dass die Spannungsverhältnisse zum hier nicht dargestellten Mittelpunkt M des Kraftumlenkschenkels 22 ebenfalls spiegelsymmetrisch sind. Der Kraftumlenkschenkel 22 selbst ist weitestgehend spannungsfrei, hat selbst daher eine vernachlässigbare Federwirkung. Er dient lediglich der Kopplung der beiden Federschenkel 18 und 19. Dargestellt ist darüber hinaus die rotative Bewegung des Federelementes 17 um den Mittelpunkt M des Kraftumlenkschenkels 22 mittels der Pfeile R.

## Patentansprüche

1. Gleitmechanismus (11) für tragbare Geräte (10), wie Mobilfunktelefon, tragbarer Computer oder persönliche digitale Assistenten, PDA, welche ein erstes Geräteteil (12), beispielsweise einer Unterschale (12) und ein zweites Geräteteil (13), beispielsweise eine Oberschale (13) umfasst, wobei Unterschale (12) und Oberschale (13) relativ zueinander beweglich angeordnet sind, so dass sie unter Vermittlung eines die Bewegungsrichtung definierenden Steuermechanismus eine erste und zweite Endlage zueinander Einnehmen können, und mit einem einstückigen Federelement (17), dessen erster Anlenkpunkt (20) der Unterschale (12) und dessen zweiter Anlenkpunkt (21) der Oberschale (13), gegebenenfalls unter Vermittlung von Zwischenbauteilen (15, 16), zugeordnet ist, derart ausgestaltet, dass mittels der Relativbewegung eines Geräteteils (12, 13) von einer Endlage bis zu einem Kraftumkehrpunkt eine Federspannung des Federelementes (17) aufgebaut wird, welche das Geräteteil (12, 13) in seine andere Endlage drängt, **dadurch gekennzeichnet, dass** das Federelement (17) zwei Federschenkel (18, 19) mit je einem Anlenkpunkt (20, 21) aufweist, die mittels eines auch unter Federspannung im wesentlichen spannungsfreien Kraftumlenkscherikels (22) miteinander gekoppelt sind.

2. Gleitmechanismus nach Anspruch 1, **dadurch gekennzeichnet, dass** das Federelement (17) zu seinem Mittelpunkt (M) punktsymmetrisch aufgebaut ist.

3. Gleitmechanismus nach Anspruch 1 oder 2, **dadurch gekennzeichnet, dass** das Federelement (17) unter Aufbau und Abbau der Federspannung eine rotative Bewegung (R, 33) um seinen Mittelpunkt (M) vollzieht.

4. Gleitmechanismus nach einem der vorhergehenden Ansprüche, **dadurch gekennzeichnet, dass** die Federschenkel (18, 19) im Wesentlichen um den Kraftumlenkschenkel (22) und/oder den Mittelpunkt (M) des Federelementes (17) gekrümmt ausgebildet sind.

5. Gleitmechanismus nach einem der vorhergehenden Ansprüche, **dadurch gekennzeichnet, dass** die Federschenkel (18, 19) mäanderartig ausgebildet sind, wobei einzelne Federschenkelabschnitte (24 bis 28) mittels Mäanderschlingen (29) einander zugeordnet sind.

6. Gleitmechanismus nach Anspruch 5, **dadurch gekennzeichnet, dass** die Federschenkelabschnitte (24 bis 28) im Wesentlichen um den Kraftumlenkschenkel (22) und/oder den Mittelpunkt (M) des Federelementes (17) gekrümmt ausgebildet sind.

7. Gleitmechanismus nach einem der vorhergehenden Ansprüche, **dadurch gekennzeichnet, dass** der Kraftumlenkschenkel (22) im Symmetriepunkt (M) ein Lager aufweist, mittels dessen das Federelement (17) an wenigstens einem der Geräteteile (12, 13) drehbar gelagert ist.

8. Gleitmechanismus nach einem der vorhergehenden Ansprüche, **dadurch gekennzeichnet, dass** das Federelement (17) als Stanzteil einer Folie oder eines metallischen Bleches ausgebildet ist.

9. Gleitmechanismus nach einem der Ansprüche 1 bis 7, **dadurch gekennzeichnet, dass** das Federelement (17) als Spritzgießteil ausgebildet ist.

10. Gleitmechanismus nach einem der vorhergehenden Ansprüche, **dadurch gekennzeichnet, dass** der Mittelpunkt (M) des Federelementes (17) etwa mittig auf dem Kraftumlenkschenkel (22) liegt.

## Claims

1. Sliding mechanism (11) for portable appliances (10), such as a mobile telephone, portable computer or personal digital assistants (PDA), which comprises a first part (12) of the appliance, for example a lower shell (12), and a second part (13) of the appliance, for example an upper shell (13), wherein the lower shell (12) and upper shell (13) are arranged so as to be movable relative to one another, so that they are able to assume a first and a second end position in relation to one another with the intervention of a control mechanism that defines the direction of movement, and having a one-piece spring element (17) whose first point of articulation (20) is associated with the lower shell (12) and whose second point of articulation (21) is associated with the upper shell (13), optionally with the intervention of intermediate components (15, 16), configured in such a way that, by means of the relative movement of one part (12, 13) of the appliance from one end position to a force-reversing point, there is built up a spring tension in the spring element (17) which forces the part (12, 13) of the appliance into its other end position,
**characterised in that**
the spring element (17) has two legs (18, 19) which each have a point of articulation (20, 21) and which are coupled to one another by means of a force-reversing leg (22) which is substantially devoid of tension, even under spring tensioning.

2. Sliding mechanism according to claim 1, **characterised in that** the spring element (17) is designed so as to be point-symmetrical in relation to its centre point (M).

3. Sliding mechanism according to claim 1 or 2, **characterised in that** the spring element (17) performs a rotatory movement (R, 33) about its centre point (M) when the spring tension is built up and reduced.

4. Sliding mechanism according to one of the preceding claims, **characterised in that** the legs (18, 19) of the spring are substantially constructed so as to be curved around the force-reversing leg (22) and/or the centre point (M) of the spring element (17).

5. Sliding mechanism according to one of the preceding claims, **characterised in that** the legs (18, 19) of the spring are of meander-like construction, individual sections (24 to 28) of said legs being associated with one another by means of loops (29) of the meander.

6. Sliding mechanism according to claim 5, **characterised in that** the sections (24 to 28) of the legs of the spring are substantially constructed so as to be curved around the force-reversing leg (22) and/or the centre point (M) of the spring element (17).

7. Sliding mechanism according to one of the preceding claims, **characterised in that** the force-reversing leg (22) has, at the point of symmetry (M), a bearing by means of which the spring element (17) is rotatably mounted on at least one of the parts (12, 13) of the appliance.

8. Sliding mechanism according to one of the preceding claims, **characterised in that** the spring element (17) is constructed as a stamped part of a foil or of a metal sheet.

9. Sliding mechanism according to one of claims 1 to 7, **characterised in that** the spring element (17) is constructed as an injection-moulded part.

10. Sliding mechanism according to one of the preceding claims, **characterised in that** the centre point (M) of the spring element (17) lies approximately centrally on the force-reversing leg (22).

## Revendications

1. Mécanisme coulissant (11) pour appareils (10) portatifs, tels que téléphone mobile, ordinateur portable, ou assistants personnels numériques, PDA, comprenant une première partie d'appareil (12), par exemple une coque inférieure (12), et une deuxième partie d'appareil (13), par exemple une coque supérieure (13), la coque inférieure (12) et la coque supérieure (13) étant disposées de façon mobile l'une par rapport à l'autre de manière qu'elles puissent prendre, l'une par rapport à l'autre, une première et une deuxième position finale, avec intervention d'un mécanisme de commande définissant le sens de déplacement, et avec un élément élastique (17) réalisé d'une seule pièce, dont un premier point d'articulation (20) est associé à la coque inférieure (12) et dont un deuxième point d'articulation (21) est associé à la coque supérieure (13), le cas échéant avec intervention de composants intermédiaires (15, 16) réalisés de manière que, au moyen du déplacement relatif d'une partie d'appareil (12, 13), passant de la position finale à un point d'inversion de force, une contrainte élastique de l'élément élastique (17), faisant passer la partie d'appareil (12, 13) en son autre position finale, soit établie, **caractérisé en ce que** l'élément élastique (17) présente deux branches de ressort (18, 19) comprenant chacune un point d'articulation (20, 21), couplées ensemble au moyen d'une branche de renvoi de force (22) pratiquement sans contrainte, même lorsqu'une contrainte élastique agit.

2. Mécanisme coulissant selon la revendication 1, **caractérisé en ce que** la construction de l'élément élastique (17) répond à une symétrie ponctuelle par rapport à son point central (M).

3. Mécanisme coulissant selon la revendication 1 ou 2, **caractérisé en ce que** l'élément élastique (17) effectue un mouvement de rotation (R, 33) autour de son point central (M), en établissant et en diminuant la contrainte élastique.

4. Mécanisme coulissant selon l'une des revendications précédentes, **caractérisé en ce que** les branches de ressort (18, 19) sont incurvées sensiblement autour de la branche de renvoi de force (22) et/ou du point central (M) de l'élément élastique (17).

5. Mécanisme coulissant selon l'une des revendications précédentes, **caractérisé en ce que** les branches de ressort (18, 19) ont une allure en méandre, des tronçons de branches de ressort (24 à 28) individuels étant associés les uns aux autres au moyen de boucles entre méandres (29).

6. Mécanisme coulissant selon la revendication 5, **caractérisé en ce que** les tronçons de branches de ressort (24 à 28) sont incurvées sont incurvés sensiblement autour de la branche de renvoi de force (22) et/ou du point central (M) de l'élément élastique (17).

7. Mécanisme coulissant selon l'une des revendications précédentes, **caractérisé en ce que** la branche de renvoi de force (22) présente, au point de symétrie (M), un palier, au moyen duquel l'élément élastique (17) est monté en palier, avec possibilité de rotation, sur au moins l'une des parties d'appareil (12, 13).

8. Mécanisme coulissant selon l'une des revendications précédentes, **caractérisé en ce que** l'élément élastique (17) est réalisé sous forme de pièce d'estampage d'une feuille ou d'une tôle métallique.

9. Mécanisme coulissant selon l'une des revendications 1 à 7, **caractérisé en ce que** l'élément élastique (17) est réalisée sous forme de pièce moulée par injection.

10. Mécanisme coulissant selon l'une des revendications précédentes, **caractérisé en ce que** le point central (M) de l'élément élastique (17) est situé à peu près au centre sur la branche de renvoi de force (22).
